# EUROPEAN PATENT SPECIFICATION

(11) **EP 4 323 805 B1**
(45) Date of publication and mention of the grant of the patent: **12.03.2025**
(21) Application number: 22723487.9
(22) Date of filing: 12.04.2022
(51) Int. Cl.: G01V 3/08, G01S 13/88, G01S 13/86, G01S 7/04, G02B 27/01, G06F 3/01, G06T 19/00

(54) **DEVICE AND METHOD FOR DETECTING AND VISUALIZING UNDERGROUND OBJECTS**
VORRICHTUNG UND VERFAHREN ZUR ERKENNUNG UND VISUALISIERUNG UNTERIRDISCHER OBJEKTE
DISPOSITIF ET PROCÉDÉ DE DÉTECTION ET DE VISUALISATION D'OBJETS SOUTERRAINS

(30) Priority: 13.04.2021 NL 1043992
(43) Date of publication of application: 21.02.2024
(73) Proprietor: SIMULTRIA B.V., 3542CB Utrecht (NL)
(72) Inventor: KAMPHUIS, Jan, 7607 XX Almelo (NL)
(74) Representative: Peters, Sebastian Martinus
(86) International application number: PCT/NL2022/000004
(87) International publication number: WO 2022/220674

(56) References cited:
- EP-A1- 3 798 993
- US-A1- 2017 323 480
- SANAT A. TALMAKI ET AL: "Geospatial Databases and Augmented Reality Visualization for Improving Safety in Urban Excavation Operations", GEOSPATIAL DATABASES AND AUGMENTED REALITY VISUALIZATION FOR IMPROVING SAFETY IN URBAN EXCAVATION OPERATIONS - - CONSTRUCTION RESEARCH CONGRESS 2010: INNOVATION FOR RESHAPING CONSTRUCTION PRACTICE; 20100508 TO 20100510; BANFF, AB, USA, 4 May 2010 (2010-05-04), USA, pages 91 - 101, XP055483361, ISBN: 978-0-7844-1109-4, DOI: 10.1061/41109(373)10
- KADDIOUI AHMED ET AL: "Uses of Augmented reality for urban utilities management", MATEC WEB OF CONFERENCES, vol. 295, 1 January 2019 (2019-01-01), pages 02009, XP055824161, ISSN: 2274-7214, DOI: 10.1051/matecconf/201929502009
- MAURER TANA ET AL: "Counter-mine augmented reality training system (CMARTS)", SPIE PROCEEDINGS; [PROCEEDINGS OF SPIE ISSN 0277-786X], SPIE, US, vol. 11012, 10 May 2019 (2019-05-10), pages 1101210 - 1101210, XP060120796, ISBN: 978-1-5106-3673-6, DOI: 10.1117/12.2518120

## Description

The invention relates to a device for detecting and visualizing underground objects in an environment, the device comprising:
- first means arranged and suitable for collecting first data regarding the underground objects by means of GPR (ground-penetrating radar) technique;
- second means arranged and suitable for converting the first data into first virtual images of the underground objects; and
- third means arranged and suitable for combining the first virtual images with real images of the environment by means of MR (mixed reality) technique and showing them to a user.

The invention also relates to a method for detecting and visualizing underground objects in an environment, the method comprising:
- collecting first data regarding the underground objects by means of GPR (ground-penetrating radar) technique using first means provided for that purpose;
- converting the first data into first virtual images of the underground objects using second means provided for that purpose; and
- combining the first virtual images with real images of the environment by means of MR. (mixed reality) technique and showing them to a user using third means provided for that purpose.

US2017323480A1 describes such a device and method. However, interpreting the first virtual images collected and shown by GPR technique is difficult, especially for an untrained and unskilled user. The present invention now provides a solution therefor.

To this end, the invention provides a device according to the preamble of claim 1, characterized in that:
- the device also comprises fourth means arranged and suitable for extracting second data regarding the underground objects from a GIS (geographical information system) database;
- the second means are also arranged and suitable for converting the second data into second virtual images of the underground objects; and
- the third means are also arranged and suitable for combining the second virtual images with the first virtual images and the real images by means of MR (mixed reality) technique and showing them to the user.

To this end, the present invention also provides a method according to the preamble of claim 4, characterized in that the method also comprises:
- extracting second data regarding the underground objects from a GIS (geographical information system) database using fourth means provided for that purpose;
- converting the second data into second virtual images of the underground objects using the second means; and
- combining the second virtual images with the first virtual images and the real images by means of MR (mixed reality) technique and showing them to the user using the third means.

By combining the second virtual images obtained on the basis of the GIS database with the first virtual images obtained by means of GPR. technique and the real images, the first virtual images can be interpreted in a more user-friendly manner, and more readily and precisely, also by an untrained and unskilled user, and the GIS data can also be checked for correctness.

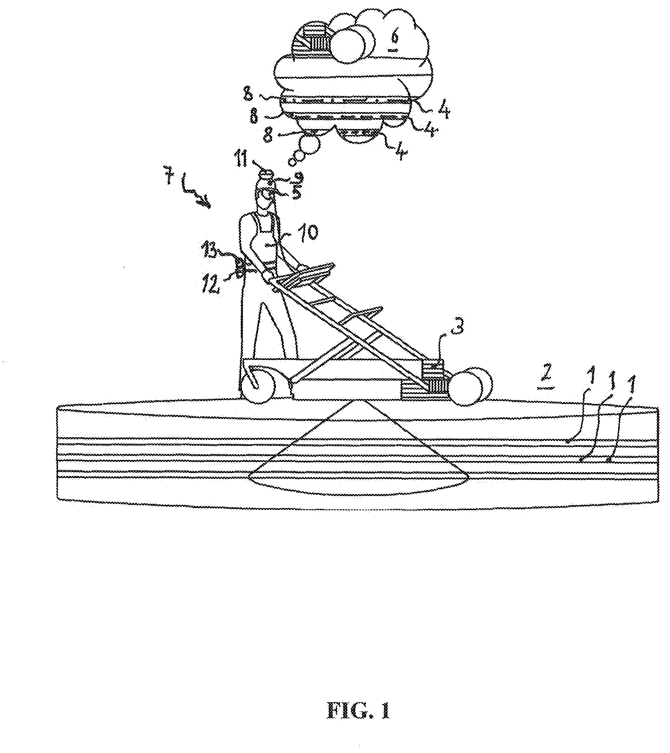

The invention is further elucidated below with a non-limiting embodiment of a device according to the invention, shown more or less schematically in figure 1.

The device shown in Figure 1 comprises first means (3) for collecting first data regarding underground objects (1) comprising a GPR, and second means for converting the first data into first virtual images (4) of the underground objects ( 1), here a power line, a gas pipe and a fiber optic cable. The device also comprises third means (5), here comprising an OMRS (outdoor mixed reality system), here a'Microsoft HoloLens2', for combining the first virtual images (4) with real images (6) of the environment (2) and showing them to a user (7).

For localizing the first means (3) and the third means (5), use is made here of GNSS (global navigation satellite system) technique, such as GPS, GLONASS, Galileo, BeiDou or NavIC, whereby for a more precise localization with an accuracy of about 1 centimetre, use is made of RTK (real-time kinematic) technique. An IMU (inertial measurement unit) is also used here to determine the position and movement of the 'Microsoft HoloLens2' (5).

According to the invention, the device also comprises fourth means for extracting second data regarding the underground objects (1) from a (three~dimensional) GIS database. Storing geographic data regarding underground objects in a GIS database for later retrieval is known. Government institutions and utility companies use GIS technique, among other things, to keep track of the location of utilities, such as sewers, fiber optic cables and gas, drinking water and power lines.

The second data are converted, using the second means, into second virtual images (8) of the underground objects (1), after which the second virtual images (8), by means of the 'Microsoft HoloLens2' (5), are combined with the first virtual images (4) and the real images (6) and shown to the user (7). Thus, the first virtual images (4) obtained by means of the GPR (3) and the second virtual images (8) obtained on the basis of the GIS database can be compared and interpreted more easily and precisely. The GIS data can also be checked for correctness in this way.

The device here also comprises a helmet (9) on which part of the equipment used is mounted, namely the 'Microsoft HoloLens2' (5), an antenna (11), and a GNSS receiver with the IMU, as well as a vest (10) on which another part of the equipment used is mounted, namely a battery (12), a controller (13) and an RTK radio. Of course, other divisions of the equipment used are also possible.

## Claims

1. A device for detecting and visualizing underground objects (1) in an environment (2), the device comprising:
- first means (3) configured for collecting first data regarding the underground objects (1) by means of ground-penetrating radar, GPR, technique;
- second means configured for converting the first data into first virtual images (4) of the underground objects (1); and
- third means (5) configured for combining the first virtual images (4) with real images (6) of the environment (2) by means of mixed reality, MR, technique and showing the combined images to a user (7),
**characterized in that**:
- the device also comprises fourth means configured for extracting second data regarding the underground objects (1) from a geographical information system, GIS, database;
- the second means are also configured for converting the second data into second virtual images (8) of the underground objects (1); and
- the third means (5) are also configured for combining the second virtual images (8) with the first virtual images (4) and the real images (6) by means of mixed reality, MR, technique and showing the combined images to the user (7).

2. Device according to claim 1, **characterized in that** the device also comprises a helmet (9) and that at least part of the second means and the third means (5) and the fourth means are mounted on or in the helmet (9).

3. Device according to claim 1 or 2, **characterized in that** the device also comprises a vest (10) and that at least part of the second means and the third means (5) and the fourth means are mounted on or in the vest (10),

4. A method for detecting and visualizing underground objects (1) in an environment (2), the method comprising:
- collecting first data regarding the underground objects (1) by means of ground-penetrating radar, GPR, technique, using first means (3);
- converting the first data into first virtual images (4) of the underground objects (1) using second means; and
- combining the first virtual images (4) with real images (6) of the environment (2) by means of mixed reality, MR, technique and showing the combined images to a user (7) using third means (5),
**characterized in that** the method also comprises;
- extracting second data regarding the underground objects (1) from a geographical information system, GIS, database using fourth means;
- converting the second data into second virtual images (8) of the underground objects (1) using the second means; and
- combining the second virtual images (8) with the first virtual images (4) and the real images (6) by means of mixed reality, MR, technique and showing the combined images to the user (7) using the third means (5).

5. Method according to claim 4, **characterized in that** the method also comprises localizing the first means (3) by means of global navigation satellite system, GNSS, technique.

6. Method according to claim 4 or 5, **characterized in that** the method also comprises localizing the third means (5) by means of global navigation satellite system, GNSS, technique.

7. Method according to claim 5 or 6, **characterized in that** real-time kinematic, RTK, technique is also used for the localization.

8. Method as claimed in any of claims 4-7, **characterized in that** the method also comprises determining the position and movement of the third means (5) by means of an inertial measurement unit, IMU.

## Patentansprüche

1. Vorrichtung zum Erfassen und Sichtbarmachen von unterirdischen Objekten (1) in einer Umgebung (2), wobei die Vorrichtung umfasst:
- erste Mittel (3), die konfiguriert sind zum Sammeln von ersten Daten über die unterirdischen Objekte (1) mittels der Technik des bodendurchdringenden Radars, GPR;
- zweite Mittel, die konfiguriert sind zum Umwandeln der ersten Daten in erste virtuelle Bilder (4) der unterirdischen Objekte (1); und
- dritte Mittel (5), die konfiguriert sind zum Kombinieren der ersten virtuellen Bilder (4) mit realen Bildern (6) der Umgebung (2) mit Hilfe der Technik der gemischten Realität, MR, und zum Zeigen der kombinierten Bilder an einen Benutzer (7),
**dadurch gekennzeichnet, dass**:
- die Vorrichtung außerdem vierte Mittel umfasst, die konfiguriert sind zum Extrahieren von zweiten Daten über die unterirdischen Objekte (1) aus einer Datenbank eines geografischen Informationssystems, GIS;
- die zweiten Mittel auch konfiguriert sind, um die zweiten Daten in zweite virtuelle Bilder (8) der unterirdischen Objekte (1) umzuwandeln; und
- die dritten Mittel (5) auch konfiguriert sind, um die zweiten virtuellen Bilder (8) mit den ersten virtuellen Bildern (4) und den realen Bildern (6) mit Hilfe der Technik der gemischten Realität, MR, zu kombinieren und die kombinierten Bilder dem Benutzer (7) zu zeigen.

2. Vorrichtung nach Anspruch 1, **dadurch gekennzeichnet, dass** die Vorrichtung auch einen Helm (9) umfasst und dass zumindest ein Teil der zweiten Mittel und der dritten Mittel (5) und der vierten Mittel auf oder in dem Helm (9) angebracht sind.

3. Vorrichtung nach Anspruch 1 oder 2, **dadurch gekennzeichnet, dass** die Vorrichtung auch eine Weste (10) umfasst und dass zumindest ein Teil der zweiten Mittel und der dritten Mittel (5) und der vierten Mittel an oder in der Weste (10) angebracht sind.

4. Verfahren zum Erkennen und Sichtbarmachen von unterirdischen Objekten (1) in einer Umgebung (2), wobei das Verfahren umfasst:
- Sammeln von ersten Daten über die unterirdischen Objekte (1) mit Hilfe der Technik des bodendurchdringenden Radars, GPR, unter Verwendung erster Mittel (3);
- Umwandlung der ersten Daten in erste virtuelle Bilder (4) der unterirdischen Objekte (1) unter Verwendung zweiter Mittel; und
- Kombinieren der ersten virtuellen Bilder (4) mit realen Bildern (6) der Umgebung (2) mittels der Technik der gemischten Realität, MR, und Anzeigen der kombinierten Bilder für einen Benutzer (7) unter Verwendung dritter Mittel (5),
**dadurch gekennzeichnet, dass** das Verfahren auch umfasst;
- Extrahieren von zweiten Daten bezüglich der unterirdischen Objekte (1) aus einer Datenbank eines geographischen Informationssystems, GIS, unter Verwendung vierter Mittel;
- Umwandlung der zweiten Daten in zweite virtuelle Bilder (8) der unterirdischen
Objekte (1) unter Verwendung der zweiten Mittel; und
- Kombinieren der zweiten virtuellen Bilder (8) mit den ersten virtuellen Bildern (4) und den
realen Bildern (6) mit Hilfe der Technik der gemischten Realität (MR) und Zeigen der kombinierten Bilder dem Benutzer (7) unter Verwendung der dritten Mittel (5).

5. Verfahren nach Anspruch 4, **dadurch gekennzeichnet, dass** das Verfahren auch ein Lokalisieren der ersten Mittel (3) mittels der Technik des globalen Navigationssatellitensystems, GNSS, umfasst.

6. Verfahren nach Anspruch 4 oder 5, **dadurch gekennzeichnet, dass** das Verfahren auch ein Lokalisieren der dritten Mittel (5) mittels der Technik des globalen Navigationssatellitensystems, GNSS, umfasst.

7. Verfahren nach Anspruch 5 oder 6, **dadurch gekennzeichnet, dass** für das Lokalisieren auch die Technik der Echtzeit-Kinematik, RTK, verwendet wird.

8. Verfahren nach einem der Ansprüche 4 bis 7, **dadurch gekennzeichnet, dass** das Verfahren auch ein Bestimmen der Position und der Bewegung der dritten Mittel (5) mittels einer Trägheitmesseinheit, IMU, umfasst.

## Revendications

1. Dispositif de détection et de visualisation d'objets souterrains (1) dans un environnement (2), le dispositif comprenant :
- des premiers moyens (3) configurés pour collecter des premières données concernant les objets souterrains (1) au moyen d'une technique de radar à pénétration de sol, GPR ;
- des deuxièmes moyens configurés pour convertir les premières données en premières images virtuelles (4) des objets souterrains (1) ; et
- des troisièmes moyens (5) configurés pour combiner les premières images virtuelles (4) avec des images réelles (6) de l'environnement (2) au moyen d'une technique de réalité mixte, MR, et pour montrer les images combinées à un utilisateur (7),
**caractérisé en ce que** :
- le dispositif comprend également des quatrièmes moyens configurés pour extraire des secondes données concernant les objets souterrains (1) à partir d'une base de données de système d'information géographique, GIS ;
- les deuxièmes moyens sont également configurés pour convertir les secondes données en secondes images virtuelles (8) des objets souterrains (1) ; et
- les troisièmes moyens (5) sont également configurés pour combiner les secondes images virtuelles (8) avec les premières images virtuelles (4) et les images réelles (6) au moyen d'une technique de réalité mixte, MR, et pour montrer les images combinées à l'utilisateur (7).

2. Dispositif selon la revendication 1, **caractérisé en ce que** le dispositif comprend également un casque (9) et qu'au moins une partie des deuxièmes moyens et des troisièmes moyens (5) et des quatrièmes moyens est montée sur ou dans le casque (9).

3. Dispositif selon la revendication 1 ou 2, **caractérisé en ce que** le dispositif comprend également un gilet (10) et qu'au moins une partie des deuxièmes moyens et des troisièmes moyens (5) et des quatrièmes moyens est montée sur ou dans le gilet (10).

4. Procédé de détection et de visualisation d'objets souterrains (1) dans un environnement (2), le procédé comprenant :
- la collecte de premières données concernant les objets souterrains (1) au moyen d'une technique de radar à pénétration de sol, GPR, en utilisant des premiers moyens (3) ;
- la conversion des premières données en premières images virtuelles (4) des objets souterrains (1) en utilisant des deuxièmes moyens ; et
- la combinaison des premières images virtuelles (4) avec des images réelles (6) de l'environnement (2) au moyen d'une technique de réalité mixte, MR, et la représentation des images combinées à un utilisateur (7) en utilisant des troisièmes moyens (5),
**caractérisé en ce que** le procédé comprend également :
- l'extraction de secondes données concernant les objets souterrains (1) à partir d'une base de données de système d'information géographique, GIS, en utilisant des quatrièmes moyens ;
- la conversion des secondes données en secondes images virtuelles (8) des objets souterrains (1) en utilisant les deuxièmes moyens; et
- la combinaison des secondes images virtuelles (8) avec les premières images virtuelles (4) et les images réelles (6) au moyen d'une technique de réalité mixte, MR, et la représentation des images combinées à l'utilisateur (7) en utilisant les troisièmes moyens (5).

5. Procédé selon la revendication 4, **caractérisé en ce que** le procédé comprend également la localisation des premiers moyens (3) au moyen d'une technique de système mondial de navigation par satellite, GNSS.

6. Procédé selon la revendication 4 ou 5, **caractérisé en ce que** le procédé comprend également la localisation des troisièmes moyens (5) au moyen d'une technique de système mondial de navigation par satellite, GNSS.

7. Procédé selon la revendication 5 ou 6, **caractérisé en ce qu'**une technique de cinématique en temps réel, RTK, est également utilisée pour la localisation.

8. Procédé selon l'une quelconque des revendications 4 à 7, **caractérisé par le fait que** le procédé comprend également la détermination de la position et du mouvement des troisièmes moyens (5) au moyen d'une unité de mesure inertielle, IMU.
